**Europäisches Patentamt**

**European Patent Office**

**Office européen des brevets**

(19)

(11) Veröffentlichungsnummer: **0 035 249**
A1

# EUROPÄISCHE PATENTANMELDUNG

(12)

(21) Anmeldenummer: 81101415.8

(22) Anmeldetag: 26.02.81

(51) Int. Cl.³: **G 01 L 9/00**, G 01 L 9/16, G 01 L 23/24

(30) Priorität 04.03.80 DE 3008301

(43) Veröffentlichungstag der Anmeldung: 09.09.81
Patentblatt 81/36

(84) Benannte Vertragsstaaten: **AT DE FR GB IT**

(71) Anmelder: **SIEMENS AKTIENGESELLSCHAFT** Berlin und München, Postfach 22 02 61, **D-8000 München 22 (DE)**

(72) Erfinder: **Heer, Klaus-Peter, Dipl.-Ing., Max-Dortu-Strasse 6, D-7500 Karlsruhe (DE)**

(54) **Induktiver Sensor zur Druckmessung in Rohrleitungen.**

(57) Induktiver Sensor zur Druckmessung in Rohrleitungen (21) über die druckabhängige Dehnung eines magnetischen Leitungsmaterials, bei dem dehnungsspannungsabhängige Permeabilitätsänderungen der Rohrleitungswand mit Hilfe mindestens einer dicht an der äusseren Rohrwand anliegenden Sattelspule (23) als in einem an die Spule angeschlossenen elektrischen Messkreis messbare Induktivitätsänderungen der Spule (23) ein Mass für Druckänderungen in der Leitung (21) bilden.

SIEMENS AKTIENGESELLSCHAFT     Unser Zeichen
Berlin und München         VPA 80 P 3503

Induktiver Sensor zur Druckmessung in Rohrleitungen

Die Erfindung bezieht sich auf einen induktiven Sensor zur Druckmessung in Rohrleitungen über die druckabhängige Dehnung eines magnetischen Leitermaterials.

In der DE-OS 27 47 949 ist in den Figuren 3 bis 6 und in den auf diese Figuren bezogenen Beschreibungsteilen eine Einrichtung zur elektrischen Messung des Druckverlaufs in einem Rohr beschrieben, bei dem eine Brennstoffleitung von einer teilbaren, ringförmigen Schelle umgeben ist, deren Innendurchmesser größer ist als der Außendurchmesser des umfaßten Rohres. Der Zwischenraum ist mit einer elastischen Manschette ausgefüllt. Die ringförmige Schelle enthält zwei Magnetkerne, die gleichfalls im wesentlichen ringförmig sind und jeweils einen Luftspalt aufweisen. Sie tragen eine Leiterwicklung. Die Magnetkerne sind innerhalb der Schelle so angeordnet, daß ihre Luftspalte in Richtung des von der Schelle umgebenen Rohres weisen. Bei Druckänderungen des im Rohr befindlichen Druckmediums pulsiert der Durchmesser des Rohres. Die elastische Manschette nimmt die Rohrweitungen auf; es verändert sich der Abstand zwischen der äußeren Rohrwand und den Luftspalten der Magnetkerne. Dies ruft Induktivitätsänderungen der Kerne hervor, die über ihre Wicklungen erfaßt und ausgewertet werden können.

Es wurde nun festgestellt, daß Meßeffekte an Brennstoffeinspritzleitungen von Brennkraftmotoren sehr stark durch Erschütterungen der Rohrleitung beeinflußt werden, die bei einer laufenden Brennkraftmaschine unvermeidlich sind und vor allem dann sich auswirken, wenn der Meßef-

Li 4 Bz / 03.03.1980

fekt an geometrische Veränderungen von Spaltweiten oder
dergleichen gebunden ist.

Aus diesem Mangel ergab sich die der Erfindung zugrundeliegende Aufgabe, einen induktiven Geber der eingangs
genannten Art zu schaffen, der eine Größe mißt, die
nicht vom Abstand zwischen dem druckführenden Rohr und
einem Gebergehäuse abhängig ist.
Diese Aufgabe wird bei einem eingangs genannten induktiven Sensor gemäß der Erfindung dadurch gelöst, daß
dehnungsspannungsabhängige Permeabilitätsänderungen des
Rohrleitungsmaterials mit Hilfe mindestens einer dicht
an der äußeren Rohrwand anliegenden Sattelspule als in
einem an die Spule angeschlossenen elektrischen Meßkreis
meßbare Induktivitätsänderungen ein Maß für Druckänderungen in der Rohrleitung bilden.

Der neue Geber wird nicht von einer geometrischen Größe,
die leicht von Erschütterungen zu beeinflussen ist, angeregt. Er liegt unmittelbar auf der Wand des Rohres und
erfaßt die Permeabilitätsänderungen, die durch dehnungsbedingte Spannungen im Rohrleitungsmaterial entstehen.

In einer anderen Ausführungsform der Erfindung bilden
zwei an einander gegenüberliegenden Stellen unmittelbar
an die Rohrwand angelegte Sattelspulen die Primär- und
Sekundärwicklung eines Transformators, wobei Änderungen
der Sekundärspannung des Transformators, die durch dehnungsbedingte Permeabilitätsänderungen des Rohrleitungsmaterials verursacht sind, als Maß der Druckänderungen
in der Rohrleitung dienen.
Zweckmäßig sind die Spulen in Blöcke aus nichtmagnetischem Material, beispielsweise Gießharz, eingelassen.
Die Blöcke sind Bestandteile einer die Rohrleitung umschließenden, leicht lösbaren Klammer oder Zange.

Die Erfindung wird an vier Figuren erläutert, die Ausführungsbeispiele in schematischer Darstellung zeigen.
Figur 1 zeigt eine Gesamtansicht des Sensors, in der auch die Klammer oder Zange, mit der dieser an die Rohrleitung angepreßt wird, sichtbar ist.
Figur 2 ist eine Schnittdarstellung einer Sattelspule.
Figur 3 stellt eine Aufsicht auf eine Sattelspule dar.
In Figur 4 sind zwei zusammen mit der Rohrleitung einen Transformator bildende Spulen in einer Querschnittsdarstellung gezeigt.

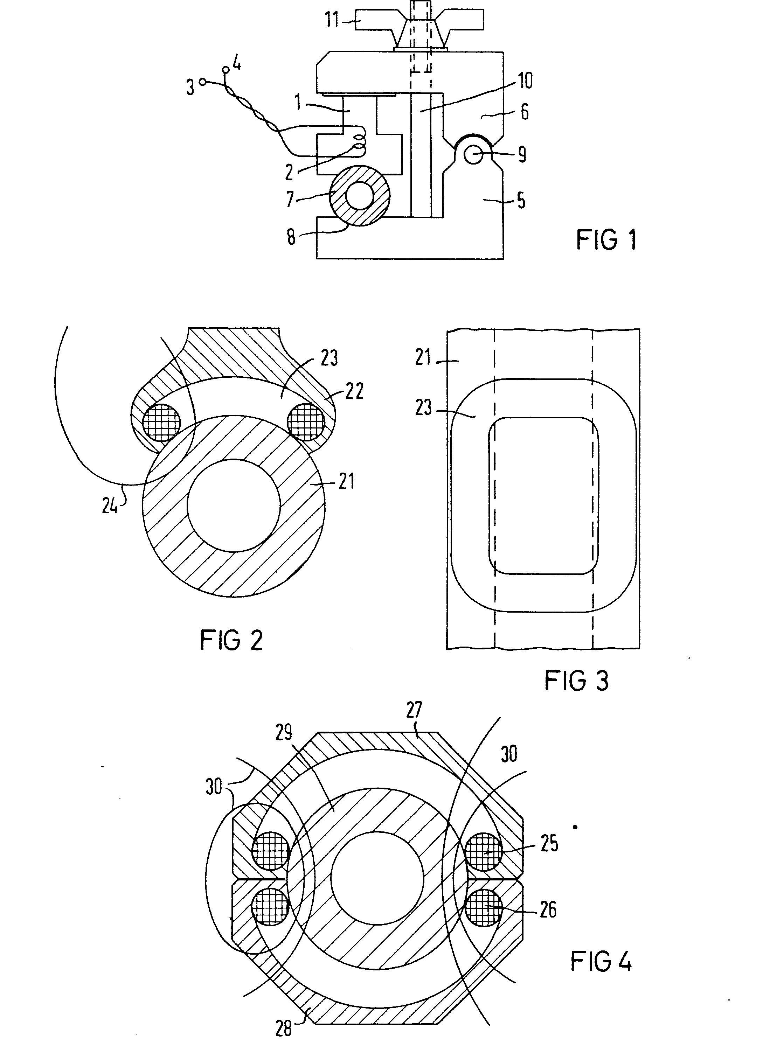

In Figur 1 ist in einem T-förmigen Block 1 aus nichtmagnetischem Material eine Spule 2 eingelassen, die in Wirklichkeit als Sattelspule ausgeführt ist. Anfang und Ende der Spule sind in Leitungen 3 und 4 aus dem Block 1 herausgeführt; an sie kann eine elektrische Meßeinrichtung, beispielsweise eine Trägerfrequenzbrücke, angeschlossen werden. Der Block 1 wird mit Hilfe einer aus einem unteren Teil 5 und einem oberen Teil 6 bestehenden Klammer an eine Brennstoffeinspritzleitung 7 gepreßt. Dazu ist im unteren Teil 5 ein Rohrlager 8 eingearbeitet, dem eine gleichartig gekrümmte Fläche im Block 1 entspricht. Zum leichten An- und Abmontieren sind Unterteil 5 und Oberteil 6 der Klammer über ein Gelenk 9 miteinander verbunden. Der Anpreßdruck wird mit Hilfe einer Schraube 10 und einer Flügelmutter 11 erzeugt. Die Schraube ist am Unterteil 5 befestigt und durch einen Schlitz im Oberteil 6 geführt.

In Figur 2 stellt 21 die Rohrleitung im Querschnitt dar. Auf der äußeren Rohrwand liegt unmittelbar die in einen Gießharzblock 22 eingelassene Sattelspule 23. Eine bei Stromfluß in der Sattelspule 23 auftretende magnetische Feldlinie 24 soll andeuten, daß das magnetische Feld der Spule 23 in die Wand der Rohrleitung 21 eindringt und deshalb von Permeabilitätsänderungen des Leitungsmaterials beeinflußt ist.

In Figur 3 ist die Rohrleitung 21 und die Sattelspule 23 in einer Aufsicht dargestellt. Der Gießharzblock ist der größeren Übersicht halber weggelassen.

In Figur 4 werden zwei Sattelspulen 25 und 26 in entsprechenden Blöcken 27 und 28 an eine Rohrleitung 29 angelegt. Die Spulen 25 und 26 bilden zusammen mit dem magnetischen Material der Leitung 29 einen Transformator. Zur Verdeutlichung sind einige Feldlinien 30 des resultierenden Magnetfeldes eingezeichnet.

4 Figuren
5 Patentansprüche

0035249

<u>Patentansprüche</u>

1. Induktiver Sensor zur Druckmessung in Rohrleitungen über die druckabhängige Dehnung eines magnetischen Leitungsmaterials, d a d u r c h  g e k e n n z e i c h n - e t , daß dehnungsspannungsabhängige Permeabilitäts- änderungen des Rohrleitungsmaterials mit Hilfe mindestens einer dicht an der äußeren Rohrwand anliegenden Sattelspule (23) als in einem an die Spule angeschlossenen elektrischen Meßkreis meßbare Induktivitätsänderungen ein Maß für Druckänderungen in der Rohrleitung (21) bilden.

2. Induktiver Sensor nach Anspruch 1, d a d u r c h  g e k e n n z e i c h n e t , daß zwei an einander gegenüberliegenden Stellen unmittelbar an die Rohrwand angelegte Sattelspulen (25, 26) die Primär- und Sekundärwicklung eines Transformators bilden und Änderungen der Sekundärspannung des Transformators als Maß der Druckänderungen in der Rohrleitung (29) dienen.

3. Induktiver Sensor nach Anspruch 1 oder 2, d a - d u r c h  g e k e n n z e i c h n e t , daß die Spulen (2, 23, 25, 26) in Blöcke (1, 22, 27, 28) aus nichtmagnetischem Material eingelassen sind.

4. Induktiver Sensor nach Anspruch 3, d a d u r c h  g e k e n n z e i c h n e t , daß als nichtmagnetisches Material Gießharz verwendet ist.

5. Induktiver Sensor nach Anspruch 3 oder 4, d a - d u r c h  g e k e n n z e i c h n e t , daß die Blöcke (1, 22, 27, 28) Bestandteile einer die Rohrleitung (7) eng umschließenden, leicht lösbaren Klammer (5, 6) oder Zange bilden.

0035249

1/1    80 P 3509

FIG 1

FIG 2

FIG 3

FIG 4

Europäisches
Patentamt

**EUROPÄISCHER RECHERCHENBERICHT**

0035249
Nummer der Anmeldung

EP 81 10 1415

| | EINSCHLÄGIGE DOKUMENTE | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| | FR - A - 943 238 (ETAT FRANCAIS)<br>* Insgesamt * | 1 | G 01 L  9/00<br>9/16<br>23/24 |
| | -- | | |
| D | DE - A - 2 747 949 (LIST, HANS)<br>* Ansprüche 1,2,5,6; Seite 7; Figuren 3-5 * | 1-3 | |
| | -- | | |
| P | EP - A - 0 017 200 (SIEMENS AKTIEN-GESELLSCHAFT)<br>* Zusammenfassung; Seite 5, Zeilen 30-36; Seite 6; Seite 7, Zeilen 1-3; Figuren 4-7 * | 1,3,4 | **RECHERCHIERTE SACHGEBIETE** (Int. Cl.³) |
| | -- | | G 01 L  9/00<br>9/16<br>23/24<br>9/10<br>F 02 M 65/00<br>G 01 L 23/14 |
| A | US - A - 3 940 992 (E.M. JOST et al.)<br>* Zusammenfassung; Ansprüche 1, 13; Figur 1 * | 1 | |
| | ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16-06-1981 | VISENTIN |

EPA form 1503.1  06.78